# EUROPÄISCHE PATENTSCHRIFT

(11) **EP 2 487 393 B1**
(45) Veröffentlichungstag und Bekanntmachung des Hinweises auf die Patenterteilung: **02.12.2020**
(21) Anmeldenummer: 12154367.2
(22) Anmeldetag: 08.02.2012
(51) Int. Cl.: F16K 7/06

(54) **Klemmventil**
Clamp valve
Vanne de serrage

(30) Priorität: 14.02.2011 DE 102011004045
(43) Veröffentlichungstag der Anmeldung: 15.08.2012
(73) Patentinhaber: WMF Group GmbH, 73312 Geislingen/Steige (DE)
(72) Erfinder: Startz, Armin, 89197 Weidenstetten (DE)
(74) Vertreter: Pfenning, Meinig & Partner mbB

(56) Entgegenhaltungen:
- EP-A1- 0 447 985
- WO-A1-2007/057034
- DE-A1- 19 907 109
- GB-A- 2 274 326
- US-A- 4 967 940

## Beschreibung

Die vorliegende Erfindung betrifft ein Klemmventil zur Beeinflussung eines Durchflusses durch einen elastischen Schlauch gemäß dem Oberbegriff des Anspruchs 1. Die Erfindung betrifft außerdem einen mit einem derartigen Klemmventil ausgestatteten Getränkeautomaten, insbesondere eine Kaffeemaschine.

Aus der US 5,326,033 B ist ein gattungsgemäßes Klemmventil zum Steuern eines Durchflusses durch einen flexiblen Schlauch bekannt. Dieses Klemmventil weist dabei ein Exzenterrad mit einer außenliegenden Exzenterkontur auf, das je nach Drehstellung ein Klemmelement unterschiedlich stark betätigt und dabei unterschiedlich stark gegen den flexiblen Schlauch drückt. Hierdurch wird der Durchfluss durch den Schlauch mittels der Drehstellung des Exzenterrades beeinflusst.

Aus der US 4,596,37 4 ist ein weiteres Klemmventil zum Steuern eines Durchflusses durch einen flexiblen Schlauch bekannt, welches jedoch mit einem Spindeltrieb arbeitet.

Weitere Klemmventile für flexible Schläuche sind beispielsweise aus der EP 1 446 175 B1 sowie aus der EP 0 659 444 B1 bekannt.

Die GB 2 274 326 A offenbart Quetschventile und ein chemisches Nachfüllsystem, das die Quetschventile aufweist.

Die DE 199 07 109 A1 offenbart ein Gasventil für Heizgas mit einem verstellbaren Strömungsquerschnitt, durch welchen das Heizgas über eine Gasleitung zu einer Heizstelle, beispielsweise einer Kochstelle, oder einer Heizanlage geleitet wird.

Die vorliegende Erfindung beschäftigt sich mit dem Problem, für ein Klemmventil der gattungsgemäßen Art eine verbesserte oder zumindest eine alternative Ausführungsform anzugeben, die insbesondere eine exakte Durchflusssteuerung bei einer gleichzeitig kompakten Bauform ermöglicht.

Dieses Problem wird erfindungsgemäß durch den Gegenstand von Anspruch 1 gelöst. Vorteilhafte Ausführungsformen sind Gegenstand der abhängigen Ansprüche.

Die vorliegende Erfindung beruht auf dem allgemeinen Gedanken, bei einem Klemmventil zum Beeinflüssen eines Durchflusses durch einen flexiblen Schlauch oder eines Querschnitts des Schlauchs mittels eines Exzenterrades und einem damit verbundenen Klemmelement ein Getriebe zwischen dem Exzenterrad und einem dieses antreibenden Motor vorzusehen. Je nach Drehstellung des Exzenterrades betätigt dies ein Klemmelement unterschiedlich weit und drückt dieses somit unterschiedlich weit gegen den flexiblen Schlauch. Zum Antrieb dieses Exzenterrades ist ein Motor vorgesehen, dessen Antriebswelle versetzt zur Drehachse des Exzenterrades angeordnet ist. Zur Darstellung eines kompakt bauenden Getriebes weist dabei das Exzenterrad beispielsweise eine Innenverzahnung auf, die mit einer an der Antriebswelle des Motors angeordneten Außenverzahnung kämmt. Generell sind aber auch andere Übersetzungen, Riementriebe, Spindel- oder Schneckentriebe denkbar. Je nach Auslegung des Motors kann dabei ein Über-/Untersetzungsverhältnis größer, kleiner oder gleich eins sein. Der Motor ist dabei in üblicher Weise mit einer Steuerung verbunden, die diesen entsprechend den gewünschten Stellkräften oder Stellgeschwindigkeiten ansteuert. Durch die Übersetzung zwischen dem Motor und dem Exzenterrad lassen sich auch hohe Stellkräfte darstellen, die die insbesondere bei diesen hohen Stellkräften erforderliche genaue Stellbewegungen ermöglichen. Hierdurch lässt sich ein Klemmventil schaffen, das besonders für den Einbau in Getränkeautomaten, insbesondere in Kaffeevollautomaten, geeignet ist. Zu einer einfachen Positionierung des Klemmventils in einem Ausgangszustand, wird das Exzenterrad zu Beginn der Zustellbewegung mit einer Exzenterkontur versehen, auf die bei Bedarf unter voller Bestromung das Klemmelement aufgefahren werden kann. Diese Position definiert dabei eine eindeutige Winkelposition des Exzenterrades und stellt zugleich den Startpunkt der Zustellbewegung dar. Darüber hinaus kann die Steuerung über eine Stillstandserkennung des Motors verfügen, die dann bei entsprechendem Fahrbefehl auch den Stillstand der Referenzposition erkennt.

Im Vergleich zu bisher bei Klemmventilen bekannten Linearmotoren mit eingebauten Spindel und Spindelmutter oder auch bei Systemen mit außenliegendem Linearantrieb über eine Spindel, weist das erfindungsgemäße Klemmventil den großen Vorteil auf, Endpositionen zuverlässig zu erkennen. Bei bisherigen mit Spindelantrieb versehenen Linearmotoren konnte die Spindelmutter und die axiale Lagerung überdimensional gegenüber einem Normalbetrieb belastet werden, sofern die Endposition erreicht wurde. Für diesen Fall mussten die Systeme besonders robust ausgelegt werden. Ebenfalls konnte bei derartigen Spindelsystemen der Fall auftreten, dass bei Erreichen der Endposition eine Selbsthemmung auftrat, die motorisch nicht mehr gelöst werden konnte.

Erfindungsgemäß weist eine Exzenterkontur bzw. Exzentergeometrie des Exzenterrades unterschiedliche Steigungen auf. So ist beispielsweise in Bereichen, in denen große Klemmkräfte und eine hohe Stellgenauigkeit gefordert sind, eine geringe Steigung innerhalb eines definierten Winkelbereichs vorgesehen, wogegen in Bereichen, in denen kleine Klemmkräfte und eine geringe Stellgenauigkeit gefordert sind, große Steigungen vorgesehen sind. Über die Größe der Steigung kann selbstverständlich auch eine Stellgeschwindigkeit des Klemmventils beeinflusst werden.

Nach einer vorteilhaften Weiterbildung der erfindungsgemäßen Lösung, kann zum Antrieb des Klemmventils ein Schrittmotor verwendet werden, der durch ein gesteuertes, schrittweise rotierendes elektromagnetisches Feld um einen definierbaren Winkel gedreht werden kann. Derartige Schrittmotoren sind zum Einen kostengünstig herzustellen und derart robust, dass sie auch in modernen Getränkeautomaten problemlos eingesetzt werden können. Zum Anderen ermöglichen derartige Schrittmotoren eine hohe Stellgenauigkeit, wodurch eine Steuerung eines Getränkezubereitungsprozesses besonders exakt darstellbar ist.

Weitere wichtige Merkmale und Vorteile der Erfindung ergeben sich aus den Unteransprüchen, aus der Zeichnung und aus der zugehörigen Figurenbeschreibung anhand der Zeichnung.

Ein bevorzugtes Ausführungsbeispiel der Erfindung ist in der Zeichnung dargestellt und wird in der nachfolgenden Beschreibung näher erläutert.

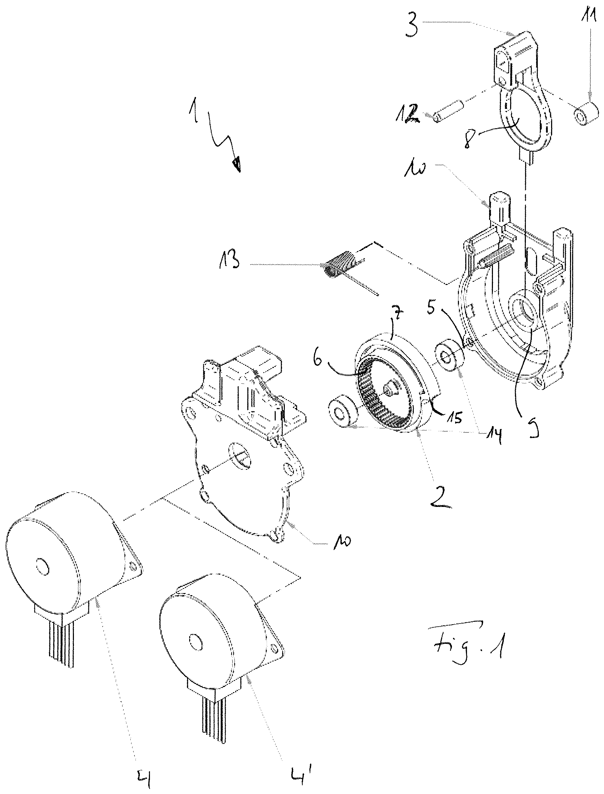

Die einzige Figur 1 zeigt eine Explosionsdarstellung eines erfindungsgemäßen Klemmventils.

Entsprechend der Fig. 1, weist ein erfindungsgemäßes Klemmventil 1 zum Beeinflussen eines Durchflusses durch einen nicht gezeigten flexiblen Schlauch, ein Exzenterrad 2 auf, das je nach Drehstellung ein Klemmelement 3 unterschiedlich weit betätigt, das heißt linear verstellt und dabei unterschiedlich weit gegen den flexiblen Schlauch drückt. Darüber hinaus ist ein Motor 4, 4' zum Antrieb des Exzenterrades 2 vorgesehen, der als Gleichstrommotor 4 oder als Wechselstrommotor 4' ausgebildet sein kann. Erfindungsgemäß ist nun eine Antriebswelle des Motors 4, 4' drehversetzt zur Drehachse 5 des Exzenterrades 2 angeordnet, und zwischen der Antriebswelle und der Drehachse eine Übersetzung, insbesondere ein Getriebe, vorgesehen, wobei das Exzenterrad 2 zur Realisierung eines Getriebes beispielsweise eine Innenverzahnung 6 aufweist, die mit einer an der Antriebswelle des Motors 4, 4' angeordneten Außenverzahnung kämmt. Hierdurch lässt sich ein kompakt bauendes Getriebe darstellen, welches eine äußerst kompakte Bauform des gesamten Klemmventils 1 ermöglicht und welches zudem in der Lage ist, hohe Stellkräfte exakt zu erzeugen.

Der Motor 4, 4' kann beispielsweise als Schrittmotor ausgebildet sein und dadurch eine exakte Einnahme von unterschiedlichsten Drehwinkelstellungen gewährleisten. Darüber hinaus weist eine außenliegende Exzenterkontur 7 des Exzenterrades 2 unterschiedliche Steigungen auf, wodurch unterschiedlich Stellgeschwindigkeiten, Stellgenauigkeiten und Klemmkräfte darstellbar sind. In Bereichen, in denen große Klemmkräfte und eine Stellgenauigkeit gefordert sind, weist demzufolge die außenliegende Exzenterkontur 7 des Exzenterrades 2 eine geringe Steigung auf, wogegen es eine größere Steigung aufweist, in Bereichen, denen kleine Klemmkräfte und eine geringer Stellgenauigkeit gefordert sind. Eine unterschiedliche Steigung bedeutet, dass das Exzenterrad 2 in unterschiedlichen Winkelbereichen unterschiedliche Radialausdehnungen, das heißt Radiuszunahmen besitzt.

Betrachtet man die Fig. 1 weiter, so kann man erkennen, dass das Klemmelement 3 über ein Langloch 8 an einer zugehörigen Kontur 9 am Gehäuse 10 des Klemmventils 1 geführt ist. Zusätzlich kann das Klemmelement 3 als Klemmstößel ausgebildet sein und über eine Rolle 11 an der Exzenterkontur 7 des Exzenterrades 2 anliegen. Diese Rolle 11 kann an einem Zylinderstift 12 gelagert sein, wobei selbstverständlich auch denkbar ist, dass ausschließlich ein derartiger Zylinderstift 12 vorgesehen ist.

Zur Rückstellung des Klemmelementes 3 kann eine Federeinrichtung 13 vorgesehen sein, die beispielsweise als Schenkelfeder ausgebildet ist und die das Klemmelement 3 in ständigem Kontakt mit dem Exzenterrad 2 hält. Sowohl das Exzenterrad 2 als auch die Antriebswelle des Motors 4, 4' können über Kugellager 14 besonders leichtlaufend gelagert sein.

Prinzipiell kann ein derartiges Klemmventil 1 im Bereich eines nicht gezeigten Getränkeautomatens, beispielsweise eines Kaffeevollautomatens eingesetzt werden, in welchem während des Herstellungsprozesses von Kaffeemischgetränken eine exakte Durchflusssteuerung unterschiedlicher Medien erforderlich ist.

Die Exztenterkontur 7 weist darüber hinaus einen Anschlag 15 als Referenzanschlag auf, vorgesehen ist. Hierdurch ergibt sich die Möglichkeit einer Referenzfahrt (Nullstellung) durch ein Anfahren an den Anschlag 15. Wird in diese Position gefahren, so ist kein erhöhter Kraftaufwand notwendig um von dieser Position wieder wegzukommen.

Generell ist auch denkbar, dass das Exzenterrad 2 um mehr als 360 ° verdreht werden kann, insbesondere sofern das Klemmelement 3 entsprechend gelagert und das Exzenterrad 2 einen schneckenförmigen Lagerungskanal aufweist.

Das erfindungsgemäße Klemmventil 1 weist generell folgende Vorteile auf:
- eine sehr genaue Zustellbewegung in unterschiedlichsten Verstellbereichen,
- eine schnelle Anfahrbewegung im Bereich kleiner Klemmkräfte,
- eine kompakte Bauform, wenig Bauteile und dadurch eine kostengünstige Herstellung bzw. Montage,
- eine robuster Lagerung für beispielsweise eine Referenzfahrt,
- sowie das Wegfallen einer zusätzlichen und aufwändigen Sensorik, da insbesondere eine Nullposition einfach angefahren werden kann.

## Patentansprüche

1. Klemmventil (1) zum Beeinflussen eines Durchflusses durch einen flexiblen Schlauch oder eines Querschnitts desselben, mit
- einem Gehäuse (10),
- einem Exzenterrad (2), das je nach Drehstellung ein Klemmelement (3) unterschiedlich stark betätigt und dabei unterschiedlich stark gegen den flexiblen Schlauch klemmt,
- einem Motor (4,4') zum Antrieb des Exzenterrades (2),
wobei,
- eine Antriebswelle des Motors (4,4') versetzt zur Drehachse (5) des Exzenterrades (2) angeordnet ist,
- zwischen dem Motor (4,4') und dem Exzenterrad (2) eine Übersetzung, insbesondere in der Art eines Getriebes, angeordnet ist,
**dadurch gekennzeichnet, dass** eine außenliegende Exzenterkontur (7) des Exzenterrades (2) unterschiedliche Steigungen aufweist, das heißt in unterschiedlichen Winkelbereichen unterschiedliche Radialausdehnungen besitzt, wobei das Klemmelement (3) über ein Langloch (8) an einer zugehörigen Kontur (9) am Gehäuse (10) des Klemmventils (1) geführt ist.

2. Klemmventil nach Anspruch 1, **dadurch gekennzeichnet, dass** das Exzenterrad (2) eine Innenverzahnung (6) aufweist, die mit einer an der Antriebswelle des Motors (4,4') angeordneten Außenverzahnung kämmt.

3. Klemmventil nach einem der Ansprüche 1 oder 2, **dadurch gekennzeichnet,**
- **dass** der Motor (4,4') als Gleichstrom- oder als Wechselstrommotor ausgebildet ist, und/oder
- **dass** der Motor (4,4') als Schrittmotor ausgebildet ist.

4. Klemmventil nach einem der Ansprüche 1 bis 3, **dadurch gekennzeichnet, dass** das Klemmelement (3) als Klemmstößel ausgebildet ist und über eine Rolle (11) an der Exzenterkontur (7) des Exzenterrades (2) anliegt.

5. Klemmventil nach einem der Ansprüche 1 bis 4, **dadurch gekennzeichnet, dass** eine Federeinrichtung (13) zum Anpressen des Klemmelements (3) an die Exzenterkontur (7) vorgesehen ist.

6. Klemmventil nach einem der Ansprüche 1 bis 5, **dadurch gekennzeichnet, dass** an der Exzenterkontur (7) ein Anschlag als Referenzanschlag vorgesehen ist.

7. Getränkeautomat, insbesondere eine Kaffeemaschine, mit einem Klemmventil (1) nach einem der vorhergehenden Ansprüche.

8. Getränkeautomat nach Anspruch 7, **dadurch gekennzeichnet,**
- **dass** die Exzenterkontur (7) in Bereichen, in denen große Klemmkräfte und eine hohe Stellgenauigkeit gefordert sind, eine geringe Steigung aufweist,
- **dass** die Exzenterkontur (7) in Bereichen, in denen kleine Klemmkräfte und eine geringe Stellgenauigkeit gefordert sind, eine große Steigung aufweist.

## Claims

1. Clamp valve (1) for influencing a flow through a flexible hose or a cross-section of the latter, comprising
- a housing (10),
- an eccentric wheel (2) which, depending on the rotary position, actuates a clamping element (3) to varying degrees and thereby clamps it against the flexible hose to varying degrees,
- a motor (4, 4') for driving the eccentric wheel (2),
wherein
- a drive shaft of the motor (4, 4') is arranged offset to the axis of rotation (5) of the eccentric wheel (2),
- a transmission, in particular in the form of a gear mechanism, is arranged between the motor (4, 4') and the eccentric wheel (2),
**characterized in that** an outer eccentric contour (7) of the eccentric wheel (2) has different gradients, that is to say has different radial sizes in different angle ranges, the clamping element (3) being guided on an associated contour (9) on the housing (10) of the clamp valve (1) by way of an elongated hole (8) .

2. Clamp valve according to claim 1, **characterized in that** the eccentric wheel (2) has an inner toothing (6) which meshes with an outer toothing arranged on the drive shaft of the motor (4, 4').

3. Clamp valve according to any one of claims 1 or 2, **characterized in that**
- the motor (4, 4') is designed as a DC motor or as an AC motor, and/or
- the motor (4, 4') is designed as a stepper motor.

4. Clamp valve according to any one of claims 1 to 3, **characterized in that** the clamping element (3) is designed as a clamping plunger and bears by way of a roller (11) against the eccentric contour (7) of the eccentric wheel (2).

5. Clamp valve according to any one of claims 1 to 4, **characterized in that** a spring device (13) is provided for pressing the clamping element (3) against the eccentric contour (7) .

6. Clamp valve according to any one of claims 1 to 5, **characterized in that** a stop is provided as a reference stop on the eccentric contour (7).

7. Beverage machine, in particular a coffee machine, having a clamp valve (1) according to any one of the preceding claims.

8. Beverage machine according to claim 7, **characterized**
- **in that** the eccentric contour (7) has a small gradient in regions in which large clamping forces and a high adjustment accuracy are required,
- **in that** the eccentric contour (7) has a large gradient in regions in which small clamping forces and a low adjustment accuracy are required.

## Revendications

1. Vanne clamp (1) destinée à influencer un débit à travers un tuyau flexible ou une section transversale de celui-ci, avec
- un boîtier (10)
- une roue excentrique (2) qui actionne un élément de serrage (3) diversement fortement en fonction de la position de rotation et serre en l'occurrence le tuyau flexible diversement fortement,
- un moteur (4, 4') destiné à entraîner la roue excentrique (2),
- un arbre d'entraînement du moteur (4, 4') étant disposé avec un décalage par rapport à l'axe de rotation (5) de la roue excentrique (2),
- un système de transmission, en particulier à la façon d'une boîte de vitesses, étant disposé entre le moteur (4, 4') et la roue excentrique (2),
**caractérisée en ce qu'**un contour d'excentrique (7) extérieur de la roue excentrique (2) présente des pentes différentes, c'est-à-dire possède des étendues radiales différentes dans des plages angulaires différentes, l'élément de serrage (3) étant guidé par le biais d'un trou oblong (8) sur un contour (9) correspondant sur le boîtier (10) de la vanne clamp (1).

2. Vanne clamp selon la revendication 1, **caractérisée en ce que** la roue excentrique (2) comporte une denture intérieure (6) qui engrène avec une denture extérieure disposée sur l'arbre d'entraînement du moteur (4, 4').

3. Vanne clamp selon l'une des revendications 1 ou 2, **caractérisée en ce que**
- le moteur (4, 4') est constitué en tant que moteur à courant continu ou en tant que moteur à courant alternatif, et/ou
- **en ce que** le moteur (4, 4') est constitué en tant que moteur pas à pas.

4. Vanne clamp selon l'une des revendications 1 à 3, **caractérisée en ce que** l'élément de serrage (3) est constitué en tant que poussoir de serrage et est adjacent, par le biais d'un rouleau (11), au contour d'excentrique (7) de la roue excentrique (2).

5. Vanne clamp selon l'une des revendications 1 à 4, **caractérisée en ce qu'**un dispositif de ressort (13) est prévu pour presser l'élément de serrage (3) contre le contour d'excentrique (7).

6. Vanne clamp selon l'une des revendications 1 à 5, **caractérisée en ce qu'**une butée est prévue sur le contour d'excentrique (7) en tant que butée de référence.

7. Distributeur automatique de boissons, en particulier machine à café, avec une vanne clamp (1) selon l'une des revendications précédentes.

8. Distributeur automatique de boissons selon la revendication 7, **caractérisé en ce que**
- le contour d'excentrique (7) présente une faible pente dans des zones dans lesquelles d'importantes forces de serrage et une précision de réglage élevée sont exigées,
- **en ce que** le contour d'excentrique (7) présente une pente importante dans des zones dans lesquelles de faibles forces de serrage et une précision de réglage faible sont exigées.
